**Europäisches Patentamt**

**European Patent Office**

**Office européen des brevets**

(19)

(11) Veröffentlichungsnummer: **0 031 067**
**B1**

(12) # EUROPÄISCHE PATENTSCHRIFT

(45) Veröffentlichungstag der Patentschrift:
06.06.84

(51) Int. Cl.³: **G 21 C 19/46**

(21) Anmeldenummer: **80107729.8**

(22) Anmeldetag: **08.12.80**

(54) **Verfahren zum Auflösen von schwerlöslichen Kernbrennstoffen.**

(30) Priorität: **20.12.79 DE 2951510**

(43) Veröffentlichungstag der Anmeldung:
**01.07.81 Patentblatt 81/26**

(45) Bekanntmachung des Hinweises auf die Patenterteilung:
**06.06.84 Patentblatt 84/23**

(84) Benannte Vertragsstaaten:
**BE DE FR GB**

(56) Entgegenhaltungen:
**US - A - 2 942 938**
**US - A - 3 976 775**
**US - A - 4 069 293**

(73) Patentinhaber: **ALKEM GMBH, Postfach 110069,**
**D-6450 Hanau 11 (DE)**

(72) Erfinder: **Stoll, Wolfgang, Dr., Amaliastrasse 25,**
**D-6450 Hanau (DE)**
Erfinder: **Ledebrink, Wilhelm, Dr., Dörnigheimer Weg 32,**
**D-6457 Maintal 2 (DE)**

(74) Vertreter: **Mehl, Ernst, Dipl.-Ing. et al, Postfach 22 01 76,**
**D-8000 München 22 (DE)**

## Beschreibung

Die vorliegende Erfindung bezieht sich auf ein Verfahren zum Auflösen von schwerlöslichen Kernbrennstoffen, insbesondere Thoriumdioxid und Plutoniumdioxid, in einer salpetersauren, Fluorid-Ionen enthaltenden Lösung.

Beim Einsatz von Plutonium-haltigen Brennelementen findet Pu als gesintertes Oxid $PuO_2$ Verwendung. In dieser Form ist es als Brennstoff wegen seines hohen Schmelzpunktes und der hohen Sinterdichte besonders geeignet. Diese Vorteile kehren sich jedoch ins Gegenteil um, wenn der verbrauchte Kernbrennstoff zum Zwecke der Spaltstoffabtrennung periodisch aus dem Reaktor entfernt und wieder aufbereitet werden soll. Aufgrund der thermischen Vorgeschichte des Plutoniums weist es eine extrem geringe Löslichkeit in dem bei der Brennstoffverarbeitung bevorzugten Lösemedium Salpetersäure auf. Dies gilt insbesondere für bei ihrer Herstellung mechanisch vermischten U/Pu-Brennstoffe. Diese enthalten gesonderte $UO_2$- und $PuO_2$-phasen, von denen nur die $UO_2$-phasen in Salpetersäure löslich sind und somit vornehmlich $PuO_2$ als unlöslicher Rückstand bei der Auflösung zurückbleibt.

Das Problem der Auflösung von $PuO_2$ wird in der deutschen Offenlegungsschrift 2 619 089 und der US-Patentschrift 3 976 775 behandelt und als Lösemittel wird eine Mischung aus Salpetersäure und Flußsäure beschrieben. Ein Hindernis für den praktischen Einsatz dieses Verfahrens besteht aber darin, daß diese Mischsäure außerordentlich korrosiv auf metallische Lösegefäße einwirkt. Selbst bei Verwendung von Sonderstählen und Edelmetallen, außer Platin, liegen die Korrosionsraten so hoch, daß ein längerfristiger Einsatz von Metallgefäßen nicht möglich ist, zumal als unerwünschte Randerscheinungen die Verunreinigung der Kernbrennstofflösung durch gelöstes Metall auftreten würde. Bei der Auflösung von kleinen Mengen $PuO_2$ im Labormaßstab läßt sich dieses Problem durch Verwendung fluorierter korrosionsbeständiger Kunststoffe, z. B. aus Polytetrafluoräthylen, umgehen. Eine Übertragung dieser Behältertechnik auf die Maßstäbe eines Lösegefäßes in einer Wiederaufbereitungsanlage ist jedoch äußerst schwierig.

In Anbetracht dieser Schwierigkeiten stellte sich die Aufgabe, ein Löseverfahren zu finden, bei dem auch ohne Verwendung von Polytetrafluoräthylen mit normalen metallischen Lösebehältern gearbeitet werden kann.

Zur Lösung dieser Aufgabe ist ein Verfahren der eingangs erwähnten. Art erfindungsgemäß dadurch gekennzeichnet, daß eine salpetersaure Lösung verwendet wird, die einen Pu- oder U-Fluorid-Komplex enthält, der in katalytisch wirksame freie Fluorid-Ionen dissoziiert ist, und daß die schwer löslichen Kernbrennstoffe in Pulverform dieser salpetersauren Lösung zugegeben und bei Siedetemperatur aufgelöst werden.

Im Gegensatz zum erwähnten Stand der Technik enthält die hier verwendete Lösung Fluorid-Ionen nur noch in katalytisch wirksamen Mengen. Diese liegen vor aufgrund des Dissoziationsgleichgewichtes des sich aus Pu(IV) und F⁻ bildenden Plutoniumfluoridkomplexes und lassen sich über die Stabilitätskonstante K des Komplexes berechnen.

$$K = \frac{[PuF^{3+}]}{[Pu^{4+}] [F^-]}$$

= Konzentrationsverhältnis vom Pu-Komplex zum dissoziierten Anteil desselben.

Es wurde gefunden, daß die noch freien Fluorid-Ionen für die Auflösung noch ausreichend sind, dabei wirkte diese Lösung nicht aggressiver als die Salpetersäure selbst. Dadurch ist die Einsatzmöglichkeit von metallischen Lösegefäßen im technischen Maßstab möglich.

Anstelle einer $PuF^{3+}$-Ausgangslösung können auch andere F⁻ bindende Stoffe, deren Anwesenheit in der Spaltstofflösung nicht stört und darüber hinaus die Belanzierung des Plutoniums als Spaltmaterial vereinfacht, z. B. $UF_4$, der zunächst vorhandenen Salpetersäure/$PuO_2$-Suspension zugesetzt werden.

Zur Vermeidung zu hoher F⁻-Konzentration, die einen korrosiven Angriff auf das Lösegefäß verursachen, ist aber auch eine andere Vorgehensweise möglich. Man löst zunächst $PuO_2$ in reiner konzentrierter Salpetersäure. Bekanntlich sind die Auflösungsraten sehr niedrig, jedoch reicht ein geringer gelöster Pu-Anteil, um nun in kleinsten Portionen Flußsäure bzw. einen anderen Fluoridträger zusetzen zu können und unter Ausbildung der $PuF^{3+}$-Komplexes mit Hilfe der freien Fluorid-Ionen die Auflösungsgeschwindigkeit drastisch zu steigern, unter zeitweiser Nachdosierung von Fluoriden.

Zur weiteren Erläuterung dieser Erfindung sei auf die nachstehenden Ausführungsbeispiele verwiesen, in denen auch gezeigt wird, wie die Fluorid-Ionen von der Spaltstofflösung abgetrennt und gegebenenfalls recykliert werden können.

Ausführungsbeispiel 1

1 kg gealtertes schwerlösliches $PuO_2$ soll zur Americium-Abtrennung in Lösung gebracht werden. Der pulverförmige Spaltstoff wird in einem 5-l-Edelstahlgefäß mit 3,5 l einer Lösung aus 14,5 molarer $HNO_3$, 0,05 molarer HF und 0,05 molarer Pu(IV)-Nitratlösung(= 12 gPu/l) vermischt und bei der Siedetemperatur in Lösung gebracht. Die F⁻-Ionen werden dabei von Beginn an weitestgehend komplex am Pu(IV) gebunden. Die Stabilitätskonstante K des $PuF^3$-Komplexes in dieser Lösung beträgt 8,7 · 10⁷.

Die Messung der freien F⁻-Konzentration in dieser Lösung ist direkt nicht möglich. Senkt man in einer Probe dieser Lösung die H⁺-Konzentration auf pH = 5, so läßt sich meßtechnisch eine freie F⁻-Konzentration < 10 mg/l feststellen. Obwohl aufgrund des Dissoziationsgleichgewichtes des Komplexes, wie sie aus der Stabilitätskonstante K hervorgeht, die F⁻-Konzentration mit steigender $Pu^{4+}$-Konzentration abnimmt, reicht diese katalytisch kleine Menge aus, um in ca. 8 Stunden die 95%ige Auflösung des $PuO_2$ zu bewirken.

Nach dieser Auflösung wird die Flüssigkeit abfiltriert, wobei 5% des $PuO_2$ ungelöst im Filter verbleiben. In der filtrierten Spaltstofflösung mit einer Konzentration von 240 Gramm Pu/l läßt sich nun durch selektive Fällung des Pu als Pu-Oxalat, z. B. nach dem Vorschlag in der DE-OS 2 624 990, nach Verdünnung auf 2,6 molare $HNO_3$-Lösung die Trennung von Americium bewirken. Der technisch erreichbare Fällungsgrad für Plutonium beträgt ca. 95%. Zusammen mit dem Americium verbleiben 5% von 240 Gramm, also 12 Gramm Plutonium pro Liter in der Lösung. In dieser 0,05 molaren Pu-Lösung sind nahezu die gesamten Fluorid-Ionen komplex gebunden. Nach der Filtration des festen Pu-Oxalates wird das Filtrat durch Verdampfung auf 3,5 l eingeengt und kann nun erneut als Lösesäure in das Auflösegefäß für einen neuen Lösezyklus zurückgeführt werden. Die im ersten Zyklus eingesetzten komplexgebundenen Fluoride sind also nicht verlorengegangen, sondern durchlaufen, an dem Fluoridträger Plutonium gebunden, alle weiteren Lösezyklen. Mit jedem Zyklus erhöht sich die Americiumkonzentration und damit auch die Strahlenexposition des Kreislaufes. Zur Einhaltung von Maximalwerten der Strahlenbelastung innerhalb der Anlage ist man gezwungen, nach einer gewissen Zahl von Zyklen, die vom Americiumgehalt abhängt, das Filtrat der Pu-Oxalat-Fällung als flüssigen radioaktiven Abfall, der nur noch ein kleines Volumen aufweist, einer Endbehandlung zuzuführen. Soll jedoch zuvor das restliche Plutonium aus dieser Lösung abgetrennt werden, so ist es zweckmäßig, durch Zusatz sehr starker Fluorid-Komplex-Bildner, wie z. B. Zirkon (die Stabilitätskonstante des $ZrF^{3+}$-Komplexes beträgt $6,3 \cdot 10^9$) Plutonium aus dem Fluorid-Komplex zu verdrängen und in ein $Pu(NO_3)^{2-}$-Ion umzuwandeln. Durch Verwendung eines Anionenaustauschers lassen sich diese Ionen aus der Lösung entfernen, während die kationischen Zirkon-Fluorid-Komplexe mit Americium vergesellschaftet in Lösung bleiben und dem Abfall zugeführt werden. Es wäre jedoch auch möglich, hieraus nach Bedarf das Americium zu gewinnen und für andere Zwecke zu verwenden.

### Ausführungsbeispiel 2

Die sich bei der Aufarbeitung von abgebrannten Kernbrennstoffen im Salpetersäure-Auflöser ansammelnden unlöslichen $PuO_2$-haltigen Brennstoffreste sollen in Lösung gebracht werden. Um das aus rostfreiem Stahl bestehende Lösegefäß vor Korrosionseinwirkungen zu schützen, wird wie im Beispiel 1 verfahren. Die ungelösten Kernbrennstoffe, die auch Zirkon als Spaltprodukte enthalten, werden in eine Lösung, bestehend aus 0,05 molarer $Pu(NO_3)_4$, 0,05 molarer HF und 14,5 molarer $HNO_3$ eingebracht und unter Sieden gelöst. In dieser Lösung wird Fluorid entsprechend der Stabilitätskonstanten des Zirkon- und Plutonium-Fluorid-Komplexes hauptsächlich im stabileren Zirkon-Komplex gebunden. Als Folge davon verarmen die katalytisch wirksamen Fluorid-Ionen in der Lösung, so daß man HF-Lösung nachdosieren muß, um eine zufriedenstellende Lösegeschwindigkeit zu erreichen.

In dieser so erzeugten Spaltstofflösung liegen Pu-Fluorid-Komplexe vor, die den späteren Extraktionsprozeß zur Abtrennung der Spaltprodukte, z. B. im bekannten Purex-Prozeß, stören könnten. Zur Überführung des Plutoniums aus dem Komplex in ein $Pu^{4+}$-Ion werden zusätzlich zum originären Zirkon weitere der zugegebenen HF-Menge äquivalente Zirkonsalzmengen zugegeben, um das Fluorid des PuF-Komplexes in einen ZrF-Komplex umzulagern. Das Fluorid verbleibt dadurch während der Extraktion am Zirkon und hat damit seine korrosive Eigenschaft verloren. Das Plutonium steht in seiner ganzen Menge zur Weiterverarbeitung zur Verfügung. Das Fluorid dagegen gelangt letztlich zusammen mit dem Zirkon zum hochaktiven Abfall.

Diese Komplexierung des Spaltproduktes Zirkon mit Fluorid-Ionen hat über dies den Vorteil, daß die Bildung unerwünschter Trennschichtniederschläge, Polymerisate aus Zirkonyl-Ionen und strahlengeschädigtem Tributylphosphat — auch »crud« genannt — während der Extraktion unterbleibt.

Diese Beispiele zeigen, daß eine äußerst geringe Fluorid-Konzentration, nämlich kleiner als 100 ppm, genügt, um zufriedenstellende Auflösungsraten für $PuO_2$ zu erhalten. Da die Fluorid-Ionen dabei nicht verbraucht werden, kann von einer katalytischen Wirkung desselben gesprochen werden.

Abschließend sei noch darauf hingewiesen, daß nach dem hier aufgezeichneten Prinzip der Komplexbildung und der dadurch bedingten geringen Konzentration freier Fluorid-Ionen auch andere schwerlösliche Kernbrennstoffoxide, wie z. B. Thoriumdioxid, aufgelöst und weiter verarbeitet werden können.

### Patentansprüche

1. Verfahren zum Auflösen von schwer löslichen Kernbrennstoffen, insbesondere Thoriumdioxid und Plutoniumdioxid, in einer salpetersauren, Fluorid-Ionen enthaltenden Lösung, dadurch gekennzeichnet, daß eine salpetersaure Lösung verwendet wird, die einen Pu- oder U-Fluorid-Komplex enthält, der in katalytisch wirksame freie Fluorid-Ionen dissoziiert ist, und daß die schwer löslichen Kernbrennstoffe in Pulverform dieser salpetersauren Lösung zugegeben und bei Siedetemperatur aufgelöst werden.

2. Verfahren nach Anspruch 1, dadurch gekennzeichnet, daß die am Spaltstoff komplex gebundenen Fluorid-Ionen durch Zugabe von Zirkonsalzen oder anderen stabileren Komplexbildnern in einen stabileren Komplex umgelagert werden unter gleichzeitiger Freisetzung der Spaltstoffe, die durch Abtrennung der Fluorid-Komplexe an Ionenaustauschern in an sich bekannter Weise in eine praktisch fluorid-freie Kernbrennstofflösung überführt werden.

3. Verfahren nach Anspruch 1 dadurch gekennzeichnet, daß nach Auflösung des schwerlöslichen Oxides und selektiver Fällung und Abtrennung der gelösten Stoffe nach an sich bekannten Verfahren die verbleibende Lösung, die noch geringe gelöste Spaltstoffmengen mit komplex gebundenen Fluorid-Ionen enthält, erneut als Lösungsmittel zur Auflösung weiterer Oxidmengen verwendet wird.

## Claims

1. A process for dissolving difficultly soluble nuclear fuels, in particular, thorium dioxide and plutonium dioxide, in a nitric acid solution containing fluoride ions, characterised in that a nitric acid solution is used which contains a Pu or U fluoride complex which is dissociated into catalytically active free fluoride ions; and that the difficultly soluble nuclear fuels are added to the nitric acid solution in the form of powder and are dissolved at boiling temperature.

2. A process according to claim 1, characterised in that, by adding zirconium salts, or other materials which form more stable complexes, the fluoride ions which are bound in the nuclear fuel complex, are re-arranged into a more stable complex, with simultaneous setting free of the nuclear fuels, which are converted into a practically fluoride-free nuclear fuel solution by separating the fluoride complexes in ion exchangers in known manner.

3. A process according to claim 1, characterised in that after the solution of the difficultly soluble oxide and the selective precipitation and separation of the dissolved substances, the remaining solution, which still contains small dissolved amounts of nuclear fuel with fluoride ions bound to form a complex, is reused in known manner as a solvent for the solution of further amounts of oxide.

## Revendications

1. Procédé pour dissoudre des matières combustibles nucléaires difficilement solubles, notamment du dioxyde de thorium et du dioxyde de plutonium, dans une solution d'acide nitrique contenant des ions fluorure, caractérisé en ce qu'il consiste à utilisier une solution d'acide nitrique, qui contient un complexe de fluorure de Pu ou de fluorure de U qui se dissocie en des ions fluorure libres efficaces du point de vue catalytique, et à ajouter à cette solution d'acide nitrique les matières combustibles nucléaires difficilement solubles, sous forme pulvérulente, et à les dissoudre à la température d'ébulition.

2. Procédé suivant la revendication 1, caractérisé en ce qu'il consiste à transposer, en un complexe plus stable, les ions fluorure fixés par complexation à la matière fissile, par addition de sels de zirconium ou d'autres agents complexants plus stables, avec dégagement simultané des matières fissiles qui sont transformées d'une manière en soi connue, par séparation des complexes de fluorure sur des échangeurs d'ions, en une solution de matiéres combustibles nucléaires pratiquement exempte de fluorures.

3. Procédé suivant la revendication 1, caractérisé en ce qu'il consiste, après dissolution de l'oxyde difficilement soluble et précipitation sélective et séparation des matières dissoutes, à utiliser, par un procédé en soi connu, la solution restante qui contient encore de petites quantités de matières fissiles dissoutes avec des ions fluorure fixés par complexation, à nouveau comme solvant pour la dissolution d'autres quantités d'oxydes.